# FASCICULE DE BREVET EUROPEEN

(11) **EP 4 251 398 B1**
(45) Date de publication et mention de la délivrance du brevet: **28.08.2024**
(21) Numéro de dépôt: 21782776.5
(22) Date de dépôt: 07.09.2021
(51) Int. Cl.: B29C 48/35, B29C 48/21, B29C 48/49, B29C 48/12, B29C 48/30, B29C 48/07, B29C 48/305, B29D 30/52, B29D 30/06

(54) **PROCEDE DE FABRICATION D'UNE BANDE DE ROULEMENT PAR COEXTRUSION AVEC INTEGRATION D'UNE INTERFACE DE DECOUPLAGE ENTRE BLOCS DE SCULPTURE ET COINS DE RENFORT**
VERFAHREN ZUR HERSTELLUNG EINER LAUFFLÄCHE DURCH KOEXTRUSION MIT INTEGRATION EINER ENTKOPPLUNGSSCHNITTSTELLE ZWISCHEN LAUFFLÄCHENPROFILBLÖCKEN UND VERSTÄRKUNGSKEILEN
PROCESS FOR MANUFACTURING A TREAD BY COEXTRUSION WITH INTEGRATION OF A DECOUPLING INTERFACE BETWEEN TREAD PATTERN BLOCKS AND REINFORCING WEDGES

(30) Priorité: 27.11.2020 FR 2012251
(43) Date de publication de la demande: 04.10.2023
(73) Titulaire: COMPAGNIE GENERALE DES ETABLISSEMENTS MICHELIN, 63000 Clermont-Ferrand (FR)
(72) Inventeur: ROUBY, Mickael, 63040 CLERMONT-FERRAND CEDEX 9 (FR); DENIS, Dominique, 63040 CLERMONT-FERRAND CEDEX 9 (FR)
(74) Mandataire: M.F.P. Michelin
(86) Numéro de dépôt international: PCT/FR2021/051528
(87) Numéro de publication internationale: WO 2022/112667

(56) Documents cités:
- WO-A1-2012/028429
- WO-A1-2017/146734
- WO-A1-2019/002782
- WO-A1-2019/081362

## Description

La présente invention concerne le domaine général des procédés et installations de coextrusion permettant de réaliser des profilés à base de mélanges élastomériques, notamment des profilés entrant dans la fabrication de bandages pour roues de véhicules, en particulier de bandages pneumatiques, et plus particulièrement des profilés formant des bandes de roulement.

Afin que les bandages de roues de véhicules satisfassent aux exigences requises en matière de tenue de route et de faible résistance au roulement, il est connu de réaliser des bandes de roulement qui combinent plusieurs éléments fonctionnels, à savoir tout d'abord une sous-couche radialement interne qui est réalisée dans un premier mélange élastomérique et qui est destinée à venir s'appuyer sur l'armature du sommet du bandage, une couche radialement externe qui est formée par un second mélange élastomérique distinct du premier mélange élastomérique et qui est destinée à former les blocs de sculpture de la bande de roulement, qui viendront au contact de la chaussée lorsque le bandage sera en service sur un véhicule, et enfin des renforts circonférentiels, généralement de section triangulaire, qui sont formés dans un mélange élastomérique possédant un comportement plus rigide que le second mélange élastomérique constitutif des blocs de sculpture, et qui sont destinés à soutenir latéralement les blocs de sculpture à l'encontre des déformations en dérive, c'est-à-dire à l'encontre des déformations en cisaillement latéral dans un plan contenant l'axe central de rotation du bandage.

Pour produire de tels profilés, la demanderesse a déjà développé des outillages de coextrusion adaptés, tels que décrits notamment dans les demandes WO-2019/002782 ou WO-2019/081362, dans lesquelles on prévoit entre autres de doter une tête d'extrusion d'un chenal de section triangulaire qui permet de former le renfort circonférentiel d'un seul tenant avec la sous-couche tout en différant la mise en joint du second mélange élastomérique formant les blocs de sculpture avec ledit renfort circonférentiel, afin de ne pas déstabiliser ou déformer ledit renfort au cours de l'extrusion.

Bien que les bandes de roulement ainsi obtenues donnent indéniablement satisfaction, on cherche néanmoins constamment à améliorer encore davantage les performances desdites bandes de roulement, et en particulier le compromis entre adhérence et résistance au roulement, c'est-à-dire entre tenue de route et consommation d'énergie.

Les objets assignés à l'invention visent donc à proposer un procédé permettant d'obtenir par coextrusion une bande de roulement améliorée en ce sens.

Les objets assignés à l'invention sont atteints au moyen d'un procédé de fabrication d'une bande de roulement pour bandage de roue de véhicule au cours duquel on réalise un profilé en extrudant conjointement, selon une direction d'écoulement commune qui correspond à la direction longitudinale dudit profilé, une pluralité de mélanges élastomériques, à travers un entrefer qui est délimité d'une part par une tête d'extrusion et d'autre part par une surface réceptrice, telle qu'un rouleau, de manière à pouvoir conformer la section du profilé, en épaisseur selon une direction dite « direction verticale » qui est perpendiculaire à la direction longitudinale et à la surface réceptrice, et en largeur selon une direction dite « direction latérale » qui est perpendiculaire à la direction longitudinale et à la direction verticale, ledit procédé comprenant une première étape (a) au cours de laquelle, dans une première portion de la tête d'extrusion pourvue de premiers canaux d'admission, on introduit dans l'entrefer, à travers lesdits premiers canaux d'admission, un premier mélange élastomérique qui vient au contact de la surface réceptrice pour former une sous-couche, puis une seconde étape (b) au cours de laquelle, dans une seconde portion de la tête d'extrusion située en aval de la première portion de la tête d'extrusion selon la direction longitudinale et pourvue de seconds canaux d'admission, on introduit dans l'entrefer, à travers lesdits seconds canaux d'admission, un second mélange élastomérique destiné à former un bloc de sculpture, la seconde portion de la tête d'extrusion présentant au moins une cloison de séparation qui fait saillie dans l'épaisseur de l'entrefer et qui s'étend continûment selon la direction longitudinale de sorte que ladite cloison de séparation délimite, de part et d'autre de ladite cloison de séparation dans la direction latérale, d'une part un chenal de conformation qui permet à une partie du premier mélange élastomérique de former, en continuité de matière avec la sous-couche, une excroissance dite « coin » qui fait saillie dans la direction verticale en vue de pouvoir procurer un appui au bloc de sculpture selon la direction latérale, ledit coin présentant à cet effet une paroi latérale qui s'écoule le long de la cloison de séparation et qui, dans une section droite normale à la direction longitudinale, s'étend selon une direction sécante à la surface réceptrice, et d'autre part un chenal de circulation qui permet au second mélange élastomérique de circuler le long de la seconde portion de la tête d'extrusion, au contact de la cloison de séparation, parallèlement à la paroi latérale du coin, et sans venir en joint avec ladite paroi latérale du coin, ledit procédé étant caractérisé en ce qu'il comprend une troisième étape (c) au cours de laquelle, dans une troisième portion de la tête d'extrusion venant en aval de la seconde portion de la tête d'extrusion, on prévoit un injecteur qui est situé dans le prolongement longitudinal de la cloison de séparation selon la direction longitudinale et qui est pourvu d'une fente d'injection à travers laquelle on injecte un troisième mélange élastomérique, distinct des premier et second mélanges élastomériques, de manière à ce que ledit troisième mélange élastomérique prenne place entre, et vienne enjoint avec, le premier mélange élastomérique issu du chenal de conformation et le second mélange élastomérique issu du chenal de circulation, en recouvrant la paroi latérale du coin, de sorte à former une couche d'interface dite « interface de découplage » qui isole ladite paroi latérale du coin du bloc de sculpture tout en permettant audit bloc de sculpture de venir ainsi indirectement en appui latéral contre ladite paroi latérale du coin, par l'intermédiaire de ladite interface de découplage.

Avantageusement, la présence de l'interface de découplage selon l'invention permet tout d'abord à ladite interface de découplage d'absorber, à la manière d'un coussin amortisseur, une partie du basculement latéral du bloc de sculpture lorsque ledit bloc de sculpture est soumis à une contrainte latérale, ce qui permet donc de limiter le basculement latéral du coin, et ainsi d'assurer une meilleure performance, en matière d'adhérence latérale, et donc de comportement en dérive, de la bande de roulement obtenue à partir du profilé.

En outre, plus globalement, la mise en oeuvre d'une interface de découplage selon l'invention permet avantageusement, tout en conservant un lien entre le coin et le bloc de sculpture, lien qui permet audit coin de soutenir efficacement le bloc de sculpture à l'encontre des efforts latéraux, de dissocier mécaniquement au moins en partie, malgré l'existence du lien susmentionné, le fonctionnement du bloc de sculpture du fonctionnement du coin de renfort et inversement, de sorte que chacune de ces structures, à savoir le bloc de sculpture d'une part et le coin de renfort d'autre part, peut travailler sensiblement indépendamment de l'autre.

Par conséquent, on peut tirer le bénéfice fonctionnel maximal de chaque type de structure, à savoir ici à la fois l'adhérence procurée par les blocs de sculpture, de préférence relativement souples, et la rigidité en dérive assurée par les coins de renfort, préférentiellement plus rigides que les blocs de sculpture, sans que la présence d'une structure considérée ne modifie significativement ou ne dégrade le comportement et la performance de l'autre structure.

En outre la structure selon l'invention, avec l'interface de découplage, est susceptible de réduire la résistance au roulement ainsi que la dissipation thermique hystérétique au sein du bandage lors du roulage.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe en section droite, normale à la direction longitudinale du profilé, un exemple de profilé obtenu par un procédé selon l'invention et destiné à former une bande de roulement, ainsi qu'une vue de détail agrandie dudit profilé.
La figure 2 illustre, selon une vue en perspective de dessus, une tête d'extrusion permettant de fabriquer le profilé de la figure 1, ainsi qu'un écorché du profilé correspondant.
La figure 3 illustre la tête d'extrusion de la figure 2 selon une vue en perspective de dessous.
La figure 4 illustre, selon une vue partielle en perspective, le détail de la tête d'extrusion de la figure 3.
La figure 5 illustre, selon une vue en perspective, une lame équipant la troisième portion de la tête d'extrusion des figures 2 à 4 et portant une pluralité d'injecteurs destinés à générer chacun une interface de découplage entre un bloc de sculpture et un coin adjacent destiné à étayer latéralement ledit bloc de sculpture.
La figure 6 illustre la tête d'extrusion des figures 2 à 5 selon une vue de côté.
La figure 7 illustre, selon une vue en section normale à la direction longitudinale d'écoulement, l'admission du premier mélange élastomérique destiné à former la sous-couche, et la répartition dudit premier mélange élastomérique entre plusieurs racleurs, au sein de la première portion de la tête d'extrusion de la figure 6.
La figure 8 illustre, selon une vue en section normale à la direction longitudinale d'écoulement, au sein de la seconde portion de la tête d'extrusion, l'admission du second mélange élastomérique destiné à former les blocs de sculpture, ainsi que les écoulements en parallèle dudit second mélange élastomérique et du premier mélange élastomérique conformé en coin, dans leurs chenaux respectifs séparés par les cloisons de séparation.
La figure 9 illustre, selon une vue en section normale à la direction longitudinale d'écoulement, l'arrivée dans la troisième portion de la tête d'extrusion des premier et second mélanges élastomériques, toujours séparés l'un de l'autre par les injecteurs qui se situent dans la continuité des cloisons de séparation de la seconde portion de la tête d'extrusion.
La figure 10 illustre, selon une vue en section normale à la direction longitudinale d'écoulement, l'injection du troisième mélange élastomérique à travers les fentes des injecteurs, pour former les interfaces de découplage qui s'interposent latéralement entre les blocs de sculpture et les coins de renfort qui soutiennent latéralement lesdits blocs de sculpture.

La présente invention concerne un procédé de fabrication d'une bande de roulement 1 pour bandage de roue de véhicule.

Ledit bandage de roue peut être un bandage pneumatique, au sein duquel la bande de roulement est soutenue pneumatiquement par un gaz sous pression, ou un bandage non pneumatique dit « sans air » (« airless », en anglais) au sein duquel la bande de roulement 1 est soutenue mécaniquement par des rayons solides qui relient ladite bande de roulement 1 à la jante.

Au cours de ce procédé, on réalise un profilé 2 en extrudant conjointement, selon une direction d'écoulement commune qui correspond à la direction longitudinale X dudit profilé 2, une pluralité de mélanges élastomériques M1, M2, M3, à travers un entrefer 3 qui est délimité d'une part par une tête d'extrusion 4 et d'autre part par une surface réceptrice 5, telle qu'un rouleau 6, de manière à pouvoir conformer la section du profilé 2, en épaisseur H2 selon une direction dite « direction verticale » Z qui est perpendiculaire à la direction longitudinale X et à la surface réceptrice 5, et en largeur W2 selon une direction dite « direction latérale » Y qui est perpendiculaire à la direction longitudinale X et à la direction verticale Z.

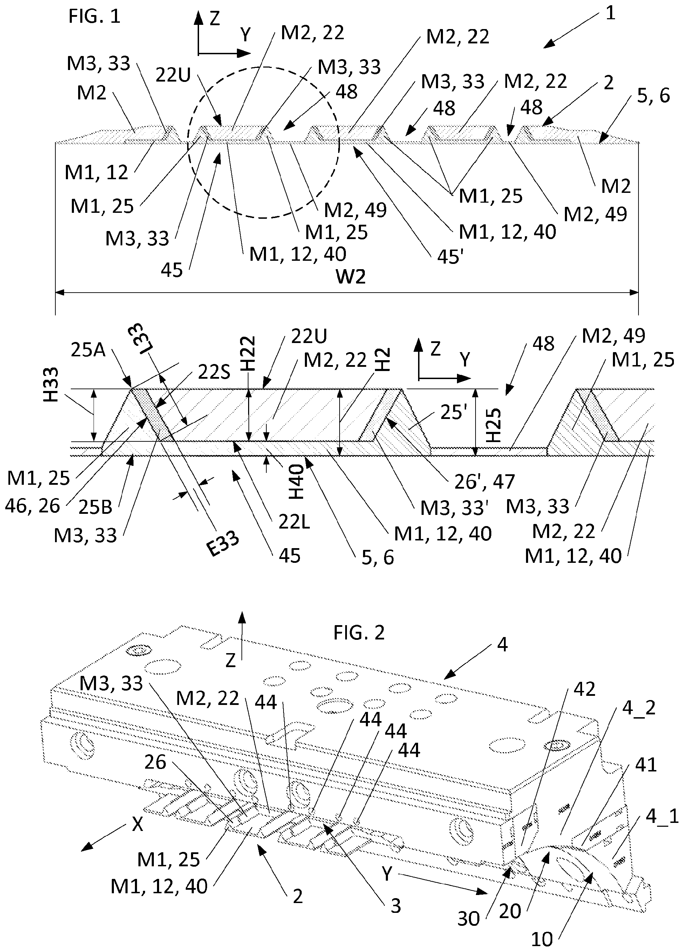

Un exemple de section d'un tel profilé 2 destiné à former une bande de roulement 1 est illustré sur la figure 1.

La surface réceptrice 5 est avantageusement montée mobile par rapport à la tête d'extrusion 4, de sorte à pouvoir être entraînée en déplacement selon la direction longitudinale X, et ainsi accompagner, voire tracter, le profilé 2 au fur et à mesure que ledit profilé 2 est généré par coextrusion.

Dans l'absolu, la surface réceptrice 5 pourrait être formée par une surface plane, telle qu'une bande convoyeuse.

Toutefois, de façon préférentielle, la surface réceptrice 5 est formée par un rouleau 6, et plus particulièrement par la surface de révolution radialement externe dudit rouleau 6, ledit rouleau 6 étant monté en rotation autour de son axe central, lequel axe central est de préférence orienté parallèlement à la direction latérale Y, et donc perpendiculairement à la direction longitudinale X. Ledit rouleau 6 formera de préférence un cylindre droit, de base circulaire.

Par commodité de description, en référence à un tel rouleau 6, et/ou en référence à l'agencement du bandage fini au sein duquel s'intègre la bande de roulement 1, on pourra assimiler la direction longitudinale X à la direction « circonférentielle », la direction latérale Y à la direction « axiale », et la direction verticale Z à la direction « radiale ».

Quelle que soit la forme de la surface réceptrice 5, la tête d'extrusion 4 présentera de préférence une forme sensiblement conjuguée, de sorte à venir recouvrir la surface réceptrice sur une zone de chevauchement commune définissant l'entrefer 3. Ainsi, en particulier, lorsque la tête d'extrusion 4 coopère avec un rouleau 6, ladite tête d'extrusion 4 présentera globalement une forme cylindrique conjuguée, en arc de cercle, de préférence centrée sur l'axe central du rouleau 6.

Le profilé 2 est avantageusement généré en continu dans le sens de sa longueur, selon la direction longitudinale X.

Les notions d'« amont et d'« aval » s'entendront ici en considération du sens global de l'écoulement du profilé, qui progresse de l'amont vers l'aval selon la direction longitudinale.

Le procédé selon l'invention comprend une première étape (a) au cours de laquelle, dans une première portion 10 de la tête d'extrusion 4 pourvue de premiers canaux d'admission 11, on introduit dans l'entrefer 3, à travers lesdits premiers canaux d'admission 11, un premier mélange élastomérique M1 qui vient au contact de la surface réceptrice 5 pour former une sous-couche 12.

Ladite sous-couche 12 est destiné à venir en appui sur et autour de l'armature de sommet du bandage auquel sera intégrée la bande de roulement 1.

De préférence, le premier mélange élastomérique M1 est un mélange à base de caoutchouc non vulcanisé.

Le procédé comprend ensuite une seconde étape (b) au cours de laquelle, dans une seconde portion 20 de la tête d'extrusion 4, qui est située en aval de la première portion 10 de la tête d'extrusion selon la direction longitudinale X, et qui est pourvue de seconds canaux d'admission 21, on introduit dans l'entrefer 3, à travers lesdits seconds canaux d'admission 21, un second mélange élastomérique M2 destiné à former un bloc de sculpture 22.

En pratique, on formera ainsi au moins un bloc de sculpture 22, et plus préférentiellement plusieurs blocs de sculpture 22 répartis sur la largeur W2 du profilé 2. Lesdits blocs de sculpture 22 formeront, au sein du bandage, la surface radialement externe dudit bandage, destinée à venir au contact de la chaussée. Au sein du bandage fini, et le cas échéant après que ledit bandage aura subi une cuisson pour vulcaniser l'un et/ou l'autre des premier, second et troisième mélanges élastomériques M1, M2, M3, lesdits blocs de sculpture 22 pourront de préférence présenter, de façon connue en soi, des entailles destinées à favoriser l'adhérence du bandage sur la chaussée.

De préférence, le second mélange élastomérique M2 est un mélange à base de caoutchouc non vulcanisé.

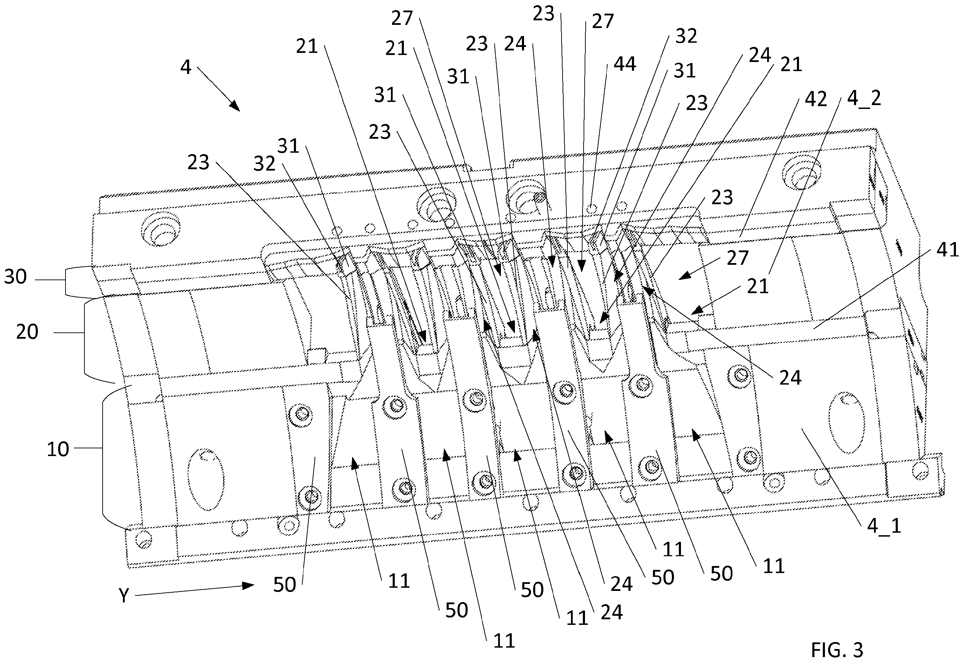

Tel que cela est bien visible sur les figures 3, 4 et 8, la seconde portion 20 de la tête d'extrusion 4 présente au moins une cloison de séparation 23 qui fait saillie dans l'épaisseur de l'entrefer 3, ici selon une composante radiale centripète à partir de la tête d'extrusion 4 en direction de l'axe de rotation du rouleau 6, et qui s'étend continûment selon la direction longitudinale X, de sorte que ladite cloison de séparation 23 délimite, de part et d'autre de ladite cloison de séparation 23 dans la direction latérale Y :
- d'une part un chenal de conformation 24 qui permet à une partie du premier mélange élastomérique M1 de former, en continuité de matière avec la sous-couche 12, une excroissance 25 dite « coin » 25 qui fait saillie dans la direction verticale Z, ici selon la direction radiale centrifuge par rapport à l'axe du rouleau 6, en vue de pouvoir procurer un appui au bloc de sculpture 22 selon la direction latérale Y, ledit coin 25 présentant à cet effet une paroi latérale 26 qui s'écoule le long de la cloison de séparation 23 et qui, dans une section droite normale à la direction longitudinale X, s'étend selon une direction sécante à la surface réceptrice 5,
- et d'autre part un chenal de circulation 27 qui permet au second mélange élastomérique M2 de circuler le long de la seconde portion 20 de la tête d'extrusion, au contact de la cloison de séparation 23, parallèlement à la paroi latérale 26 du coin 25, et sans venir en joint avec ladite paroi latérale 26 du coin 25.

Avantageusement, en formant le coin 25 d'un seul tenant avec la sous-couche 12, on assure une bonne assise et une bonne rigidité dudit coin 25, qui peut ainsi soutenir efficacement le bloc de sculpture 22 contre les efforts latéraux.

Avantageusement, la présence de la cloison de séparation 23, qui s'étend d'amont en aval depuis une extrémité amont, qui est située en amont de ou au niveau des embouchures des seconds canaux d'admission 21, jusqu'à l'extrémité aval de la seconde portion 20 de la tête d'extrusion 4, permet, au sein de ladite seconde portion 20 de la tête d'extrusion, de maintenir le flux de premier mélange élastomérique M1 formant le coin 25 séparé du flux de second mélange élastomérique M2, puisque lesdits flux circulent chacun d'un côté différent de ladite cloison de séparation 23, le long respectivement des deux faces opposées de ladite cloison de séparation 23. Ainsi, la présence de la cloison de séparation 23 permet, au sein de ladite seconde portion 20 de la tête d'extrusion, de protéger le coin 25 qui est en formation à l'intérieur du chenal de conformation 24 de l'arrivée et du flux de second mélange élastomérique M2, ce qui évite d'exposer ledit coin 25 de façon trop précoce à d'autres flux adjacents de mélanges élastomériques M2, M3, et permet ainsi audit coin 25 de se stabiliser, si bien que l'on évite audit coin 25 d'être déformé.

On garantit ainsi une bonne maîtrise du procédé et de la géométrie du coin 25.

Pour s'adapter à la géométrie du coin 25, tout en présentant une forme relativement simple, la cloison de séparation 23, et plus globalement les faces opposées qui délimitent latéralement ladite cloison de séparation 23 et qui viennent au contact respectivement du premier mélange élastomérique M1 circulant dans le chenal de conformation 24 et du second mélange élastomérique M2 circulant dans le chenal de circulation 27, s'étendent de préférence selon un angle compris entre 30 degrés et 90 degrés par rapport à la surface réceptrice 5, et plus préférentiellement en oblique, par exemple selon un angle compris entre 30 degrés et 85 degrés par rapport à la surface réceptrice 5, lorsqu'on considère ladite cloison de séparation 23, respectivement ses faces latérales, en section normale à la direction longitudinale X.

De préférence, le coin 25 présente, en section normale à la direction longitudinale X, une section de forme triangulaire, dont la base 25B repose à l'encontre de la surface réceptrice 5 et dont le sommet 25A pointe vers la tête d'extrusion 4.

Une telle forme conjugue avantageusement stabilité, robustesse, et relative simplicité de mise en forme.

La paroi latérale 26 du coin 25 formera alors un côté de la forme triangulaire, de préférence un segment de droite, qui est incliné par rapport à la direction verticale Z, et qui joint la base 25B au sommet 25A.

Bien entendu, la forme de la section du chenal de conformation 24 correspondra à la section voulue pour le coin 25. Ledit chenal de conformation 24 se présentera ainsi, en section normale à la direction longitudinale X, sous une forme concave, de préférence triangulaire, qui est ouverte sur la surface réceptrice 5, et qui va ici de préférence en s'évasant depuis la tête d'extrusion 4, à laquelle est attachée la cloison de séparation 23, en direction de la surface réceptrice 5.

Avantageusement, la paroi de séparation 23, pleine, et de préférence venue de matière avec la paroi de la seconde portion 20 de la tête d'extrusion 4 qui forme la limite supérieure de l'entrefer 3 selon la direction verticale Z, permettra de réserver un espace entre d'une part le flux de premier mélange élastomérique M1 qui forme la sous-couche 12 et le coin 25 et d'autre part le flux de second mélange élastomérique M2 qui forme le bloc de sculpture 22, ledit espace étant provisoirement occupé par ladite cloison de séparation 23, aussi longtemps que l'on se trouve au sein de la seconde portion 20 de la tête. C'est justement dans cet espace ainsi réservé par la cloison de séparation 23 que l'on pourra substituer ensuite à ladite cloison de séparation 23 une couche de troisième mélange élastomérique M3 pour former une interface de découplage 33, comme cela sera détaillé ci-dessous.

Selon l'invention, le procédé comprend en effet une troisième étape (c) au cours de laquelle, dans une troisième portion 30 de la tête d'extrusion 4, laquelle troisième portion 30 de la tête d'extrusion vient en aval de la seconde portion 20 de la tête d'extrusion, on prévoit un injecteur 31 qui est situé dans le prolongement longitudinal de la cloison de séparation 23 selon la direction longitudinale X et qui est pourvu d'une fente d'injection 32 à travers laquelle on injecte un troisième mélange élastomérique M3, distinct du premier mélange élastomérique M1 et du second mélange élastomérique M2, de manière à ce que ledit troisième mélange élastomérique M3 prenne place entre, et vienne en joint avec, le premier mélange élastomérique M1 issu du chenal de conformation 24 d'une part et le second mélange élastomérique M2 issu du chenal de circulation 27 d'autre part, en recouvrant la paroi latérale 26 du coin 25, de sorte à former une couche d'interface 33 dite « interface de découplage » 33 qui isole ladite paroi latérale 26 du coin 25 du bloc de sculpture 22 tout en permettant audit bloc de sculpture 22, ici plus particulièrement à la paroi latérale 22S dudit bloc de sculpture située en vis-à-vis de la paroi latérale 26 du coin 25, de venir ainsi indirectement en appui latéral contre ladite paroi latérale 26 du coin 25, par l'intermédiaire de ladite interface de découplage 33.

L'interface de découplage 33 ainsi interposée entre le bloc de sculpture 22 et le coin 25 empêche avantageusement le bloc de sculpture 22 d'être en contact direct avec le coin 25, et plus particulièrement empêche la face latérale 22S dudit bloc de sculpture, sécante à la face réceptrice 5, d'entrer en contact direct avec la face latérale 26 correspondante du coin 25.

Considérée dans un plan de section normal à la direction longitudinale X, l'interface de découplage 33 s'étendra de préférence en longueur L33 selon une direction principale qui est sécante à la surface réceptrice 5, et plus préférentiellement selon une direction oblique par rapport à ladite surface réceptrice, et qui correspond en pratique à la direction d'extension de la paroi latérale 26 du coin 25, tel que cela est visible sur le détail de la figure 1. A titre indicatif, ladite direction principale d'extension de l'interface de découplage 33 pourra former un angle de 30 degrés à 85 degrés par rapport à la surface réceptrice 5, et/ou, de manière équivalente, par rapport à la direction latérale Y.

Selon une variante préférentielle de mise en oeuvre, la section de l'interface de découplage 33 aura sensiblement une forme de parallélogramme, le grand côté du parallélogramme couvrant, de préférence en totalité, la paroi latérale 26 du coin 25, l'un des petits côtés du parallélogramme s'appuyant contre la sous-couche 12, et l'autre petit côté opposé affleurant le sommet 25A du coin 25, de préférence en se situant dans le prolongement horizontal de la face supérieure 22U du bloc de sculpture 22.

L'injecteur 31 se situe avantageusement dans la continuité longitudinale de la cloison de séparation 23, de sorte qu'il n'y ait pas d'interruption entre l'extrémité aval de la cloison de séparation 23 et l'extrémité amont de l'injecteur 31, qui est accolé à l'extrémité aval de la cloison de séparation, voire, selon une variante non représentée, qui pourrait être venu de matière avec ladite cloison de séparation 23. Grâce à cette continuité, l'injecteur 31 maintiendra ouvert l'espace libre créé par la cloison de séparation 23 entre le bloc de sculpture 22 et le coin 25, pour pouvoir y injecter le troisième mélange élastomérique M3, à l'emplacement ainsi prévu pour former l'interface de découplage 33.

De préférence, l'injecteur 31 présentera une largeur, considérée selon la direction latérale Y, qui est sensiblement égale, voire légèrement supérieure, à la largeur pleine de la cloison de séparation 23.

La fente d'injection 32 sera de préférence située sur la face aval de l'injecteur 31, formant le bord de fuite dudit injecteur 31.

Avantageusement, sitôt l'extrémité aval de l'injecteur 31 franchie, c'est-à-dire à partir et au-delà du bord de fuite dudit injecteur 31 dans le sens de l'écoulement, le flux de premier mélange élastomérique M1 issu du chenal de conformation 24 et le flux de second mélange élastomérique M2 issu du chenal de circulation 27 convergent l'un vers l'autre dans la direction latérale Y, de part et d'autre de la couche d'interface 33 en troisième mélange élastomérique M3, en opposition l'un de l'autre par rapport à ladite couche d'interface 33, et viennent chacun s'accoler au flux de troisième mélange élastomérique M3, donc à ladite couche d'interface 33, de sorte à s'assembler et se superposer en un agencement stratifié conformément auquel, dans la direction latérale Y, la couche d'interface 33 se trouve prise en sandwich entre la paroi latérale 26 du coin 25 et la paroi latérale 22S conjuguée correspondante du bloc de sculpture 22.

Comme indiqué plus haut, l'interface de découplage 33 ainsi interposée entre le bloc de sculpture 22 et la paroi latérale 26 du coin 25 forme une sorte d'entretoise, dans la direction latérale Y, qui permet avantageusement de dissocier, au moins dans une certaine mesure, le comportement mécanique du coin 25 du comportement mécanique du bloc de sculpture 22, afin de pouvoir tirer pleinement parti de chacun, et notamment afin de réduire la résistance au roulement, tout en conservant le bénéfice du soutènement latéral des blocs de sculpture 22 par le coin 25 pour limiter les phénomènes de dérive.

Dans l'agencement préféré selon lequel le coin 25 présente une section triangulaire, l'injecteur 31, et la fente d'injection 32, s'étendront de préférence de façon rectiligne, parallèlement au côté du triangle qui forme la paroi latérale 26 du coin 25.

De préférence, l'épaisseur H22 du second mélange élastomérique M2 formant le bloc de sculpture 22, c'est-à-dire la hauteur H22 du bloc de sculpture 22 considérée selon la direction verticale Z entre la face inférieure 22L dudit bloc de sculpture 22, orientée vers la surface réceptrice 5, et la face supérieure 22U dudit bloc de sculpture 22, qui forme la face radialement externe du bandage de roue fini, est telle que, par rapport à la surface réceptrice 5, la face supérieure 22U du bloc de sculpture 22 se situe à une altitude, considérée selon la direction verticale Z, qui est supérieure ou égale à celle du point du coin 25 le plus éloigné de la surface réceptrice 5 selon la direction verticale Z, c'est-à-dire du sommet 25A du coin 25.

De la sorte, le coin 25 ne fera pas saillie radialement vers l'extérieur par rapport au bloc de sculpture 22 au sein du bandage de roue, afin de ne pas perturber le contact entre le bloc de sculpture et la chaussée.

Selon un agencement possible, tel qu'illustré sur la figure 1, l'altitude de la face supérieure 22U du bloc de sculpture 22 sera égale à celle du sommet du coin 25A, de sorte que le sommet 25A du coin 25 sera affleurant à la face supérieure 22U du bloc de sculpture 22 adjacent qui s'appuie sur ledit coin 25 par l'intermédiaire de l'interface de découplage 33.

L'interface de découplage 33 couvre de préférence la totalité de la paroi latérale 26 du coin 25, afin d'isoler complètement ladite paroi latérale 26 du coin 25 de la paroi latérale correspondante du bloc de sculpture 22.

Ainsi, de préférence, la surface projetée de l'interface de découplage 33, considérée dans un plan de projection fictif normal à la direction latérale Y, et donc ici parallèle à la direction longitudinale X, couvre et se confond avec la surface projetée de la paroi latérale 26 du coin 25 projetée selon la direction latérale Y dans ce même plan de projection fictif.

A ce titre, l'interface de découplage 33, et donc la fente d'injection 32, s'étend de préférence, dans la direction verticale Z, sur toute la hauteur H33 qui est commune à la paroi latérale 26 du coin 25 en premier mélange élastomérique M1 d'une part et au bloc de sculpture 22 en second mélange élastomérique M2 qui s'appuie latéralement contre ledit coin 25 via ladite interface de découplage 33 d'autre part.

Avantageusement, un tel recouvrement complet de la face latérale 26 du coin 25 par l'interface de découplage 33 permet d'assurer un découplage mécanique efficace, tout en conservant un soutien latéral du bloc de sculpture 22 par le coin 25 qui est relativement homogène et réparti sur une zone étendue.

On notera que le second mélange élastomérique M2 formant le bloc de sculpture 22 peut de préférence, en-dehors de la zone couverte par l'interface de découplage 33, et plus particulièrement en-dehors de la face latérale 22S située en vis-à-vis de la face latérale 26 du coin, venir en appui direct, par sa face inférieure 22L, c'est-à-dire par sa face radialement interne au sein du bandage, contre le premier mélange élastomérique M1 de la sous-couche 12, dans une portion de ladite sous-couche 12 formant un fond de sous-couche 40.

Ledit fond de sous-couche 40 possède de préférence une épaisseur H40, préférentiellement constante le long de la direction latérale Y, qui est strictement inférieure à la hauteur du coin 25, et qui représente de préférence moins de 30 %, voire moins de 25 %, de la hauteur hors-tout H25 du coin 25 considérée selon la direction verticale Z entre la surface réceptrice 5 et le sommet 25A du coin 25, et par exemple une épaisseur H40 inférieure ou égale à 4 mm, voire inférieure ou égale à 2 mm.

Un tel fond de sous-couche 40 permet avantageusement d'assurer le positionnement et la stabilité latérale du ou des coins 25 sans affecter significativement le comportement du bloc de sculpture 22 ni la résistance au roulement, grâce à sa finesse.

On notera également que, par commodité de description, et pour éviter toute confusion, on se réfère préférentiellement à un bloc de sculpture 22, à un coin 25 associé, à une cloison de séparation 23 et à un injecteur 31 correspondants, permettant de former une interface de découplage 33 correspondante. Ceci étant, bien entendu, le profilé 2 peut de préférence, tel que cela est bien visible sur la figure 1, comprendre plusieurs blocs de sculpture 22 répartis sur sa largeur W2, une pluralité de coins 25 soutenant ces blocs de sculpture 22, par exemple à raison d'un coin 25 ou d'une paire de coins 25 par bloc de sculpture 22, et peut prévoir une interface de découplage 33 à l'une, l'autre, ou à chaque zone d'interface entre une paroi latérale 26 d'un coin 25 et un bloc de sculpture 22, de sorte que la tête d'extrusion 4 sera dotée d'autant de cloisons de séparation 23, de chenaux 24, 27 et d'injecteurs 31 correspondants, dont les caractéristiques se déduisent à l'identique de ce qui a été décrit plus haut.

Par ailleurs, par commodité de construction, la tête d'extrusion 4 présentera de préférence une structure modulaire, et comprendra par exemple de préférence : - un premier module 4_1 formant la première portion 10 de la tête d'extrusion 4, - un second module 4_2 formant la seconde portion 20 de la tête d'extrusion 4, - une première lame 41 dite « lame de transition » qui est interposée entre le premier module 4_1 et le second module 4_2 pour assurer une transition entre la première portion 10 et la seconde portion 20, et plus particulièrement pour assurer une pré-conformation de la sous-couche 12 en premier mélange élastomérique M1 afin de répartir le flux de premier mélange élastomérique M1, avant que ledit flux de premier mélange élastomérique M1 ne pénètre dans la seconde portion 20 de la tête d'extrusion, entre d'une part le fond de sous-couche 40 et d'autre part la ou les entrées du ou des chenaux de conformation 24 destinés à former, d'un seul tenant avec ledit fond de sous-couche 40, le ou les coins 25 correspondants, - et une seconde lame 42, qui forme la troisième portion 30 de la tête d'extrusion 4, et qui porte le ou les injecteurs 31.

Lesdits modules 4_1, 4_2 et lames 41, 42 seront assemblés et fixés les uns aux autres, de préférence par vissage, et de façon contiguë les unes aux autres afin d'assurer la continuité de la tête d'extrusion 4 selon la direction longitudinale X.

De préférence, tel que cela est bien visible sur les figures 3, 4, 5 et 10, la troisième portion 30 de la tête d'extrusion 4, ici préférentiellement la seconde lame 42, comporte une pluralité d'injecteurs 31 qui sont répartis le long de la direction latérale Y et destinés à former autant d'interfaces de découplage 33 distinctes.

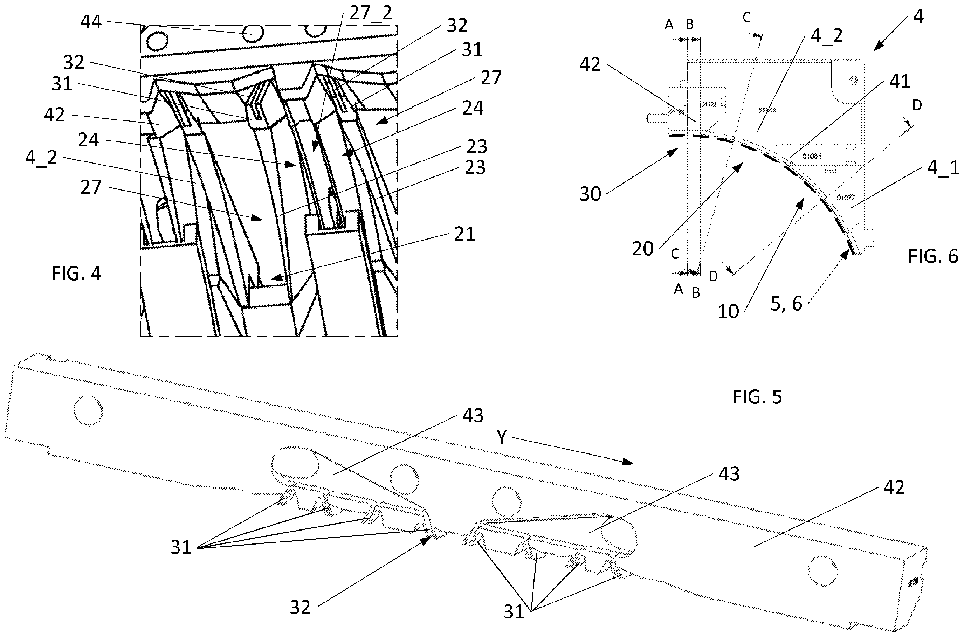

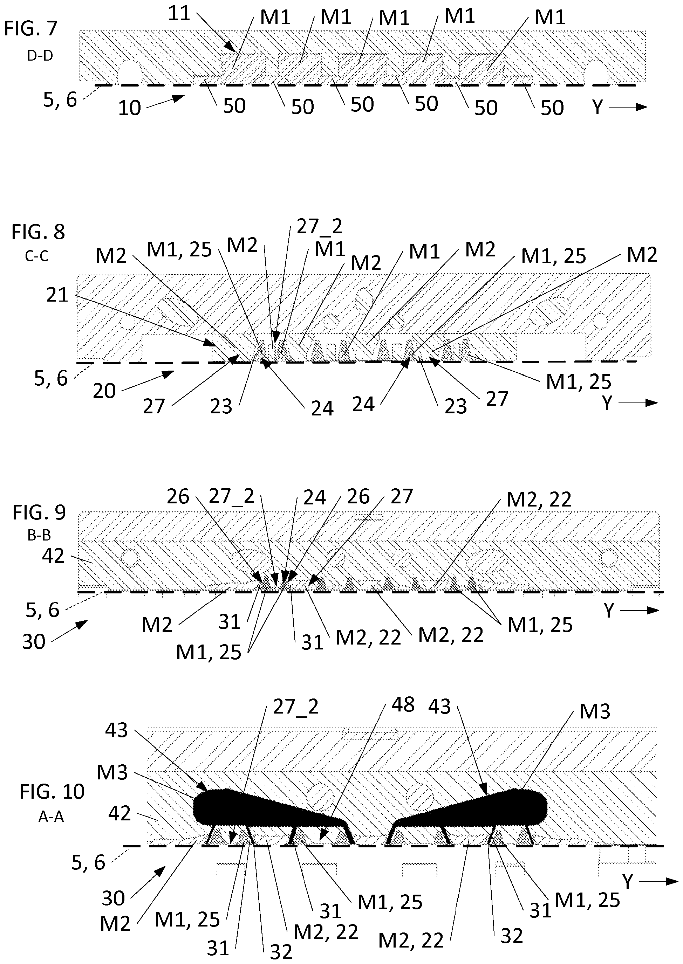

De préférence, et notamment pour limiter le nombre d'extrudeuses nécessaires à la préparation du premier mélange élastomérique M1 et à l'acheminement du premier mélange élastomérique M1 à travers la tête d'extrusion 4, lesdits plusieurs injecteurs 31, voire l'ensemble des injecteurs 31 portés par la seconde lame 42, peuvent alors être alimentés par une rampe d'injection commune 43, tel que cela est notamment visible sur les figures 5 et 10.

De façon particulièrement préférentielle, un ou plusieurs desdits injecteurs 31 alimentés par une même rampe d'injection commune 43 pourront être équipés de vis de réglage de débit 44 permettant d'ajuster la répartition du troisième mélange élastomérique M3 entre les différents injecteurs 31.

Avantageusement, ces vis de réglage de débit 44 permettront de choisir, et le cas échéant d'égaliser, les épaisseurs E33 des interfaces de découplage 33, en fonction notamment des propriétés rhéologiques des différents mélanges élastomériques M1, M2, M3.

Par simplicité de représentation, lesdites vis de réglage de débit 44 ont été assimilées, sur les figures 2 et 3, aux trous taraudés dans lesquels lesdites vis s'insèrent pour modifier la section de passage des injecteurs 31 au sein de la rampe d'injection commune 43.

Comme indiqué plus haut, le troisième mélange élastomérique M3 est distinct du premier mélange élastomérique M1 et du second mélange élastomérique M2.

Par « distincts », on entend ici que lesdits mélanges élastomériques M1, M2, M3 présentent des compositions différentes les uns des autres, et par conséquent des propriétés mécaniques différentes.

L'un des critères retenus pour sélectionner les mélanges élastomériques M1, M2, M3, au regard notamment de la fonction de découplage recherchée, est la raideur du mélange considéré, une fois ledit mélange vulcanisé lors de l'opération de cuisson du bandage.

Le paramètre retenu pour caractériser et sélectionner les mélanges élastomériques M1, M2, M3 sera de préférence le module complexe de cisaillement dynamique, noté G*. Ledit module complexe de cisaillement dynamique G* est en effet représentatif de la rigidité du mélange élastomérique considéré, et caractérise le comportement du mélange élastomérique considéré lorsque ce dernier est soumis à une contrainte de cisaillement alternée. Ledit module complexe de cisaillement dynamique G* possède, en représentation dans le plan complexe, une partie réelle, dite aussi « partie élastique » et notée G', qui caractérise le comportement élastique du mélange, et une partie imaginaire, dite aussi « partie visqueuse » et notée G", qui caractérise la dissipation d'énergie liée au comportement visqueux du mélange.

On désigne par « perte dynamique », ou « perte viscoélastique, notée Tg8, le rapport de la partie visqueuse G" par la partie élastique G', c'est-à-dire la tangente de l'argument δ dudit module complexe de cisaillement dynamique G* : Tgδ = Tan(δ) = Tan(Arg(G*)) = G"/G'.

La perte viscoélastique Tgδ et le module complexe de cisaillement dynamique G* peuvent être déterminés selon la norme ASTM D 5992-96, par une mesure des propriétés dynamiques du mélange élastomérique sur un viscoanalyseur (ici un modèle Metravib VA4000). La mesure des propriétés dynamiques est réalisée sur un échantillon de mélange élastomérique vulcanisé, ici plus particulièrement vulcanisé dans les conditions de cuisson applicables au bandage dans la constitution duquel entre le profilé 2, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz.

On effectue par ailleurs en outre, lors de cette campagne de mesure, un balayage en température à vitesse de montée en température constante de +1.5°C/min. La température de transition vitreuse Tglass de l'échantillon est en effet la température à laquelle la perte dynamique Tgδ atteint un maximum lors du balayage en température.

La valeur de G* mesurée à 23°C, ou le cas échéant à 60°C, est représentative de la rigidité du mélange élastomérique considéré, c'est-à-dire de sa résistance à la déformation, notamment de sa déformation élastique.

On notera que, au-delà des paramètres effectivement retenus pour mesurer le module complexe de cisaillement dynamique G* de chaque mélange élastomérique, c'est, à paramètres de mesure identiques, l'ordre de grandeur et la valeur relative dudit module G* d'un mélange élastomérique à l'autre qui importent pour quantifier la raideur dudit mélange élastomérique par rapport aux autres mélanges élastomériques, et par conséquent le comportement dudit mélange élastomérique au sein du bandage vulcanisé.

En l'occurrence, on choisira de préférence les mélanges élastomériques M1, M2, M3 de sorte que le premier mélange élastomérique M1 constitutif de la sous-couche 12 et du coin 25 possède un module complexe de cisaillement dynamique G*_M1 qui est strictement supérieur au module complexe de cisaillement dynamique G*_M2 du second mélange élastomérique M2 constitutif du bloc de sculpture 22, c'est-à-dire que l'on a : G*_M1 > G*_M2

Ainsi, les coins 25 présenteront un comportement intrinsèquement plus rigide, et notamment une plus grande raideur à la compression et/ou au cisaillement, que les blocs de sculpture 22, qui seront intrinsèquement plus « mous » pour favoriser l'adhérence du bandage sur la chaussée.

De même, de préférence, le module complexe de cisaillement dynamique G*_M3 du troisième mélange élastomérique M3 constitutif de l'interface de découplage 33 sera différent des modules complexes de cisaillement dynamique G*_M1, G*_M2 respectifs du premier et du second mélange élastomérique M1, M2.

On pourra ainsi différencier le comportement de l'interface de découplage 33 du comportement du coin 25 et du comportement du bloc de sculpture 22 adjacent qui bordent ladite interface de découplage 33, de sorte que ladite interface de découplage 33 n'interfère pas, en elle-même, de façon significative avec le comportement propre du coin 25 ou le comportement propre du bloc de sculpture 22.

Plus particulièrement, on pourra de préférence choisir les mélanges élastomériques M1, M2, M3 de sorte le module complexe de cisaillement dynamique G*_M3 du troisième mélange élastomérique M3 constitutif de l'interface de découplage 33 soit strictement inférieur aux modules complexes de cisaillement dynamique G*_M1, G*_M2 respectifs du premier et du second mélange élastomérique M1, M2, c'est-à-dire : G*_M3 < G*_M1 et G*_M3 < G*_M2.

Ainsi, l'interface de découplage 33 sera intrinsèquement plus « molle » que le coin 25 et le bloc de sculpture 22 qui sont reliés par ladite interface de découplage 33, ce qui permettra notamment de limiter la transmission de déformations ou de déplacements sous contrainte depuis le bloc de sculpture 22 vers le coin 25, ou réciproquement depuis le coin 25 vers le bloc de sculpture 22, à travers l'interface 33, puisque les contraintes correspondantes peuvent être absorbées par les déformations (élastiques et/ou viscoélastiques) de l'interface de découplage 33. En particulier, comme indiqué plus haut, une interface de découplage 33 « molle » permet de limiter le basculement latéral des coins 25, et ainsi d'améliorer les performances en dérive du bandage.

En outre, du fait que le troisième mélange élastomérique M3 présente un faible module complexe de cisaillement dynamique G*_M3, comparativement aux autres mélanges élastomériques M1, M2, alors la quantité de chaleur dissipée par les déformations de l'interface de découplage 33, et donc l'énergie perdue de façon cyclique sous l'effet du roulement, sera relativement faible, ce qui permet globalement d'abaisser la résistance au roulement du bandage ainsi obtenu.

A titre indicatif préférentiel, le premier mélange élastomérique M1 possède un module complexe de cisaillement dynamique G*_M1 compris entre 20 MPa et 40 MPa, par exemple égal à 30 MPa, tandis que le second mélange élastomérique M2 possède un module complexe de cisaillement dynamique G*_M2 compris entre 1 MPa et 2 MPa, par exemple égal à 1,5 MPa, et que le troisième mélange élastomérique M3 possède un module complexe de cisaillement dynamique G*_M3 compris entre 0,25 MPa et 0,55 MPa, par exemple égal à 0,4 MPa. Lesdits modules complexes de cisaillement dynamique seront ici de préférence mesurés à 60°C.

On notera que ces plages de valeurs, et plus globalement les valeurs et dimensions précisées dans la présente demande, sont notamment adaptées à la réalisation de bandages pour véhicules de tourisme, typiquement des bandages dont les dimensions correspondent à des jantes de 15 pouces à 20 pouces.

Par ailleurs, l'interface de découplage 33 présente une épaisseur E33, considérée entre le bloc de sculpture 22 et la paroi latérale 26 du coin 25, qui est de préférence comprise entre 0,5 mm et 4 mm, et par exemple égale à 2 mm.

Cette épaisseur E33 sera avantageusement choisie de manière à ce que l'interface de découplage 33 soit suffisamment épaisse pour procurer l'effet de découplage voulu entre le bloc de sculpture 22 et le coin 25, tout en étant suffisamment fine pour ne pas altérer le comportement global de la bande de roulement 1 et du bandage.

L'épaisseur E33, ici de préférence mesurée perpendiculairement à la face latérale 26 du coin 25, sera de préférence constante sur toute la hauteur H33 de l'interface de découplage 33, et donc sur toute la hauteur selon laquelle le coin 25 fait saillie par rapport au fond de sous-couche 40.

Ladite épaisseur E33 sera de préférence inférieure à la « longueur » L33 de l'interface E33, considérée en section normale à la direction longitudinale X, c'est-à-dire à la longueur de la paroi latérale 26 du coin, laquelle vaut ici préférentiellement la longueur du segment de droite qui forme le côté du triangle enjoignant la base 25B du coin au sommet 25A du coin.

On notera que, compte-tenu de l'effet de gonflement du troisième mélange élastomérique M3 que l'on peut éventuellement observer lorsqu'on libère ledit troisième mélange élastomérique M3 de l'injecteur 31, la largeur de la fente d'injection 32 pourra être choisie inférieure à l'épaisseur E33 souhaitée pour l'interface de découplage 33, et par exemple égale à 0,8 fois ladite épaisseur E33 souhaitée.

Par ailleurs, selon un agencement préférentiel qui peut constituer une invention à part entière, et notamment quel que soit le moyen utilisé pour interposer l'interface de découplage 33 entre le bloc de sculpture 22 et le coin 25, la première et la seconde portion de la tête d'extrusion 10, 20 sont agencées de manière à créer avec le premier mélange élastomérique M1 au moins un berceau 45 qui comprend d'un seul tenant un fond de sous-couche 40 qui relie entre eux un premier coin 25 et un second coin 25' qui sont distants l'un de l'autre selon la direction latérale Y et qui font saillie dans la direction verticale Z, vers la tête d'extrusion 4, par rapport audit fond de sous-couche 40, de sorte à former un premier bord latéral 46 dudit berceau 45 et un second bord latéral 47 dudit berceau 45, et en ce que l'on remplit ledit berceau 45 avec le second mélange élastomérique M2 pour former un bloc de sculpture 22, en interposant d'une part entre ledit second mélange élastomérique M2 et le premier bord latéral 46 du berceau, ici délimité par la paroi latérale 26 du premier coin 25, une première couche de troisième mélange élastomérique M3 pour former une première interface de découplage 33 entre le bloc de sculpture 22 et le premier coin 25, et d'autre part entre ledit second mélange élastomérique M2 et le second bord latéral 47 dudit berceau 45, ici délimité par la face latérale 26' du second coin 25', une seconde couche de troisième mélange élastomérique M3 pour former une seconde interface de découplage 33' entre ledit bloc de sculpture 22 et le second coin 25', tel que cela est notamment visible sur le détail de la figure 1.

Les formes et dimensions des coins 25, 25', du fond de sous-couche 40, et de leurs proportions respectives peuvent être comme indiqué plus haut.

Avantageusement, le fait de contenir le bloc de sculpture 22 concerné dans un berceau 45 selon l'invention permet notamment d'obtenir une excellente stabilité en dérive.

La mise en oeuvre de deux interfaces de découplage 33, 33' distantes et distinctes l'une de l'autre, situées latéralement de part et d'autre du même bloc de sculpture 22, permet, comme indiqué plus haut, de découpler le fonctionnement dudit bloc de sculpture 22 du fonctionnement des deux coins 25, 25' qui l'étayent latéralement sur chacun de ses côtés.

De préférence, tel que cela est notamment visible sur la figure 1, on forme au moins un premier berceau 45 et un second berceau 45' distincts, qui sont placés à distance l'un de l'autre selon la direction latérale Y et destinés à recevoir respectivement un premier bloc de sculpture 22 et un second bloc de sculpture 22', et l'on sépare lesdits premier et second berceaux 45, 45' selon la direction latérale Y au moyen d'une tranchée 48 qui préfigure un sillon circonférentiel de la bande de roulement 1, et qui est obtenue en prévoyant, de préférence dans la première portion 10 de la tête d'extrusion, un racleur 50 qui vient au contact de la surface réceptrice 5 afin d'éliminer le premier mélange élastomérique M1 constitutif de la sous-couche 12 au niveau de l'emplacement de ladite tranchée 48.

Lesdits sillons circonférentiels permettront notamment d'évacuer l'eau lorsque le bandage roulera sur une chaussée mouillée.

Le cas échéant, tel que cela est visible sur la figure 1, le fond de la tranchée 48, qui interrompt latéralement la sous-couche 12, pourra recevoir une fine couche d'habillage 49, en second mélange élastomérique M2, dont la hauteur sera bien entendu strictement inférieure à la hauteur hors-tout du coin H25, et à la hauteur cumulée du fond de sous-couche 40 et du bloc de sculpture 22 qui recouvre ledit fond de sous-couche, de sorte à conserver la forme en creux de la tranchée 48. Ladite couche d'habillage 49 pourra être acheminée et conformée par un canal de circulation auxiliaire 27_2 prévu dans la seconde portion 20 de la tête d'extrusion 4, et qui se prolonge dans la troisième portion 30 de la tête d'extrusion, par une configuration adaptée de la seconde lame 42, tel que cela est visible sur les figures 4, 8, 9 et 10. Une telle sous-couche d'habillage 49 pourra permettre d'assurer ou d'améliorer la cohésion latérale du profilé 2, en créant un pont entre berceaux voisins 45, 45', par exemple pour faciliter la manipulation et le transfert en un bloc du profilé 2 sur l'armature du bandage. Elle pourra également contribuer à habiller l'armature et donc à améliorer la finition du sommet du bandage. Ladite sous-couche d'habillage 49 peut également contribuer à améliorer le soutènement des blocs de sculpture 22 par les coins 25, et plus globalement le comportement du profilé 2 vis-à-vis des contraintes latérales.

L'invention concerne par ailleurs en tant que telle une installation d'extrusion apte à mettre en oeuvre le procédé selon l'invention, et notamment une installation d'extrusion comprenant une tête d'extrusion 4 qui présente une première portion 10, une seconde portion 20 et une troisième portion 30 telles que décrites plus haut, pourvues d'une ou plusieurs cloisons de séparation 23 qui délimitent chacune un chenal de conformation 24 par rapport à un chenal de circulation 27 et qui précèdent respectivement un ou plusieurs injecteurs 31 permettant d'interposer une interface de découplage 33 entre le bloc de sculpture 22 issu du chenal de circulation 27 et le coin 25 correspondant issu du chenal de conformation 24.

L'invention concerne également l'un ou l'autre des profilés 2 pouvant être obtenus conformément à l'une ou l'autre des variantes du procédé ci-dessus, ainsi qu'un bandage pour roue de véhicule dont la bande de roulement 1 comprend un tel profilé 2.

Ainsi, en particulier, l'invention porte sur une bande de roulement 1 qui comprend une sous-couche 12 en premier mélange élastomérique M1, au moins un coin 25 formé d'un seul tenant avec ladite sous-couche 12 de sorte à faire saillie sur ladite sous-couche, au moins un bloc de sculpture 22 réalisé dans un second mélange élastomérique M2 qui présente un module complexe de cisaillement dynamique G*_M2 strictement inférieur au module complexe de cisaillement dynamique G*_M1 du premier mélange élastomérique M1, et une couche d'interface dite « interface de découplage » 33 qui est réalisée dans un troisième mélange élastomérique M3 présentant un module complexe de cisaillement dynamique G*_M3 qui est strictement inférieur à celui G*_M2 du second mélange élastomérique M2, et a fortiori strictement inférieur à celui G*_M1 du premier mélange élastomérique M1, ladite interface de découplage 33 étant interposée entre une paroi latérale 26 du coin 25 et une paroi latérale 22S correspondante du bloc de sculpture 22, de sorte à isoler ladite paroi latérale 26 du coin 25 du bloc de sculpture 22 tout en permettant audit bloc de sculpture 22, ici plus particulièrement à la paroi latérale 22S dudit bloc de sculpture située en vis-à-vis de la paroi latérale 26 du coin 25, d'être ainsi indirectement en appui latéral contre ladite paroi latérale 26 du coin 25, par l'intermédiaire de ladite interface de découplage 33.

Les formes, dimensions, caractéristiques des mélanges élastomères, etc. au sein d'une telle bande de roulement 1 pourront bien entendu être déduites de, ou sélectionnées au sein de, la description qui précède.

De manière analogue, l'invention porte sur une bande de roulement 1 comprenant au moins un berceau 45 qui comprend d'un seul tenant, dans un premier mélange élastomérique M1, un fond de sous-couche 40 qui relie entre eux un premier coin 25 et un second coin 25' qui sont distants l'un de l'autre selon la direction latérale Y de la bande de roulement qui correspond à la direction axiale du bandage lorsque la bande de roulement 1 est en place sur ledit bandage, premier et second coins 25, 25' qui font saillie par rapport audit fond de sous-couche 40, dans une direction verticale Z qui correspond à la direction radiale du bandage, de sorte que lesdits premier et second coins 25, 25' présentent chacun en vis-à-vis l'un de l'autre selon la direction latérale Y une paroi latérale 26, 26' et forment ainsi un premier bord latéral 46 dudit berceau 45 et un second bord latéral 47 dudit berceau 45, ladite bande de roulement comprenant en outre un bloc de sculpture 22 réalisé dans un second mélange élastomérique M2 qui remplit ledit berceau 45, de préférence sur une hauteur continue sur toute la largeur du berceau, hauteur qui est de préférence affleurante aux sommets respectifs des deux coins 25, 25'. De préférence, ladite bande de roulement 1 comprend en outre une première couche d'un troisième mélange élastomérique M3 pour former une première interface de découplage 33 interposée entre le bloc de sculpture 22 et la paroi latérale 26 du premier coin 25, et une seconde couche du troisième mélange élastomérique M3 pour former une seconde interface de découplage 33' entre ledit bloc de sculpture 22 et la paroi latérale 26' du second coin 25'. Le troisième mélange élastomère M3 présente de préférence, ici encore, un module complexe de cisaillement dynamique G*_M3 strictement inférieur à celui G*_M2 du second mélange élastomérique, et strictement inférieur à celui G*_M1 du premier mélange élastomérique.

Enfin, l'invention concerne naturellement un bandage pour roue de véhicule qui possède une bande de roulement 1 selon l'une quelconques des variantes ci-dessus.

## Revendications

1. Procédé de fabrication d'une bande de roulement (1) pour bandage de roue de véhicule au cours duquel on réalise un profilé (2) en extrudant conjointement, selon une direction d'écoulement commune qui correspond à la direction longitudinale (X) dudit profilé, une pluralité de mélanges élastomériques (M1, M2, M3), à travers un entrefer (3) qui est délimité d'une part par une tête d'extrusion (4) et d'autre part par une surface réceptrice (5), telle qu'un rouleau (6), de manière à pouvoir conformer la section du profilé (2), en épaisseur (H2) selon une direction dite « direction verticale » (Z) qui est perpendiculaire à la direction longitudinale (X) et à la surface réceptrice (5), et en largeur (W2) selon une direction dite « direction latérale » (Y) qui est perpendiculaire à la direction longitudinale (X) et à la direction verticale (Z), ledit procédé comprenant une première étape (a) au cours de laquelle, dans une première portion (10) de la tête d'extrusion (4) pourvue de premiers canaux d'admission (11), on introduit dans l'entrefer (3), à travers lesdits premiers canaux d'admission (11), un premier mélange élastomérique (M1) qui vient au contact de la surface réceptrice (5) pour former une sous-couche (12), puis une seconde étape (b) au cours de laquelle, dans une seconde portion (20) de la tête d'extrusion située en aval de la première portion (10) de la tête d'extrusion selon la direction longitudinale (X) et pourvue de seconds canaux d'admission (21), on introduit dans l'entrefer (3), à travers lesdits seconds canaux d'admission (21), un second mélange élastomérique (M2) destiné à former un bloc de sculpture (22), la seconde portion (20) de la tête d'extrusion présentant au moins une cloison de séparation (23) qui fait saillie dans l'épaisseur de l'entrefer (3) et qui s'étend continûment selon la direction longitudinale (X) de sorte que ladite cloison de séparation (23) délimite, de part et d'autre de ladite cloison de séparation (23) dans la direction latérale (Y), d'une part un chenal de conformation (24) qui permet à une partie du premier mélange élastomérique (M1) de former, en continuité de matière avec la sous-couche (12), une excroissance dite « coin » (25) qui fait saillie dans la direction verticale (Z) en vue de pouvoir procurer un appui au bloc de sculpture (22) selon la direction latérale (Y), ledit coin (25) présentant à cet effet une paroi latérale (26) qui s'écoule le long de la cloison de séparation (23) et qui, dans une section droite normale à la direction longitudinale (X), s'étend selon une direction sécante à la surface réceptrice (5), et d'autre part un chenal de circulation (27) qui permet au second mélange élastomérique (M2) de circuler le long de la seconde portion (20) de la tête d'extrusion, au contact de la cloison de séparation (23), parallèlement à la paroi latérale (26) du coin (25), et sans venir enjoint avec ladite paroi latérale (26) du coin (25), ledit procédé étant **caractérisé en ce qu'**il comprend une troisième étape (c) au cours de laquelle, dans une troisième portion (30) de la tête d'extrusion venant en aval de la seconde portion (20) de la tête d'extrusion, on prévoit un injecteur (31) qui est situé dans le prolongement longitudinal de la cloison de séparation (23) selon la direction longitudinale (X) et qui est pourvu d'une fente d'injection (32) à travers laquelle on injecte un troisième mélange élastomérique (M3), distinct du premier mélange élastomérique (M1) et du second mélange élastomérique (M2), de manière à ce que ledit troisième mélange élastomérique (M3) prenne place entre, et vienne en joint avec, le premier mélange élastomérique (M1) issu du chenal de conformation (24) et le second mélange élastomérique (M2) issu du chenal de circulation (27), en recouvrant la paroi latérale (26) du coin (25), de sorte à former une couche d'interface dite « interface de découplage » (33) qui isole ladite paroi latérale (26) du coin (25) du bloc de sculpture (22) tout en permettant audit bloc de sculpture (22) de venir ainsi indirectement en appui latéral contre ladite paroi latérale (26) du coin, par l'intermédiaire de ladite interface de découplage (33).

2. Procédé selon la revendication 1 **caractérisé en ce que** le premier mélange élastomérique (M1) constitutif de la sous-couche (12) et du coin (25) possède un module complexe de cisaillement dynamique (G*_M1) qui est strictement supérieur au module complexe de cisaillement dynamique (G*_M2) du second mélange élastomérique (M2) constitutif du bloc de sculpture (22), et **en ce que** le module complexe de cisaillement dynamique (G*_M3) du troisième mélange élastomérique (M3) constitutif de l'interface de découplage (33) est différent des modules complexes de cisaillement dynamique (G*_M1, G*_M2) respectifs du premier et du second mélange élastomérique (M1, M2).

3. Procédé selon la revendication 2 **caractérisé en ce que** le module complexe de cisaillement dynamique (G*_M3) du troisième mélange élastomérique (M3) constitutif de l'interface de découplage (33) est strictement inférieur aux modules complexes de cisaillement dynamique (G*_M1, G*_M2) respectifs du premier et du second mélange élastomérique (M1, M2).

4. Procédé selon l'une des revendications précédentes **caractérisé en ce que** le premier mélange élastomérique possède un module complexe de cisaillement dynamique (G*_M1) compris entre 20 MPa et 40 MPa, par exemple égal à 30 MPa, **en ce que** le second mélange élastomérique possède un module complexe de cisaillement dynamique (G*_M2) compris entre 1 et 2 MPa, par exemple égal à 1,5 MPa, et **en ce que** le troisième mélange élastomérique possède un module complexe de cisaillement dynamique (G*_M3) compris entre 0,25 MPa et 0,55 MPa, par exemple égal à 0,4 MPa.

5. Procédé selon l'une des revendications précédentes **caractérisé en ce que** l'interface de découplage (33) présente une épaisseur (E33), considérée entre le bloc de sculpture (22) et la paroi latérale (26) du coin (25), qui est comprise entre 0,5 mm et 4 mm, et par exemple égale à 2 mm.

6. Procédé selon l'une des revendications précédentes **caractérisé en ce que** l'interface de découplage (33), et donc la fente d'injection (32), s'étend, dans la direction verticale (Z), sur toute la hauteur (H33) qui est commune à la paroi latérale (26) du coin (25) en premier mélange élastomérique (M1) d'une part et au bloc de sculpture (22) en second mélange élastomérique (M2) qui s'appuie latéralement contre ledit coin (25) via ladite interface de découplage (33) d'autre part.

7. Procédé selon l'une des revendications précédentes **caractérisé en ce que** le coin (25) présente une section de forme triangulaire, dont la base (25B) repose à l'encontre de la surface réceptrice (5) et dont le sommet (25A) pointe vers la tête d'extrusion (4).

8. Procédé selon l'une des revendications précédentes **caractérisé en ce que** la première et la seconde portion de la tête d'extrusion (10, 20) sont agencées de manière à créer avec le premier mélange élastomérique (M1) au moins un berceau (45) qui comprend d'un seul tenant un fond de sous-couche (40) qui relie entre eux un premier coin (25) et un second coin (25') qui sont distants l'un de l'autre selon la direction latérale (Y) et qui font saillie dans la direction verticale (Z), vers la tête d'extrusion (4), par rapport audit fond de sous-couche (40), de sorte à former un premier bord latéral (46) dudit berceau (45) et un second bord latéral (47) dudit berceau (45), et **en ce que** l'on remplit ledit berceau (45) avec le second mélange élastomérique (M2) pour former un bloc de sculpture (22), en interposant d'une part entre ledit second mélange élastomérique (M2) et le premier bord latéral (46) du berceau une première couche de troisième mélange élastomérique (M3) pour former une première interface de découplage (33) entre le bloc de sculpture (22) et le premier coin (25), et d'autre part entre ledit second mélange élastomérique (M2) et le second bord latéral (47) dudit berceau une seconde couche de troisième mélange élastomérique (M3) pour former une seconde interface de découplage (33') entre ledit bloc de sculpture (22) et le second coin (25').

9. Procédé selon la revendication 8 **caractérisé en ce que** l'on forme au moins un premier berceau (45) et un second berceau (45') distincts, qui sont placés à distance l'un de l'autre selon la direction latérale (Y) et destinés à recevoir respectivement un premier bloc de sculpture (22) et un second bloc de sculpture (22'), et **en ce que** l'on sépare lesdits premier et second berceaux (45, 45') selon la direction latérale (Y) au moyen d'une tranchée (48) qui préfigure un sillon circonférentiel de la bande de roulement (1), et qui est obtenue en prévoyant, de préférence dans la première portion (10) de la tête d'extrusion, un racleur (50) qui vient au contact de la surface réceptrice (5) afin d'éliminer le premier mélange élastomérique (M1) constitutif de la sous-couche (12) au niveau de l'emplacement de ladite tranchée (48).

10. Procédé selon l'une des revendications précédentes **caractérisé en ce que** la troisième portion (30) de la tête d'extrusion (4) comporte une pluralité d'injecteurs (31) qui sont répartis le long de la direction latérale (Y) et destinés à former autant d'interfaces de découplage (33) distinctes, **en ce que** lesdits injecteurs (31) sont alimentés par une rampe d'injection commune (43), et **en ce que** un ou plusieurs desdits injecteurs (31) sont équipés de vis de réglage de débit (44) permettant d'ajuster la répartition du troisième mélange élastomérique (M3) entre les différents injecteurs (31).

## Patentansprüche

1. Verfahren zur Herstellung eines Laufstreifens (1) für einen Fahrzeugreifen, in dessen Verlauf ein Profil (2) ausgeführt wird, indem entlang einer gemeinsamen Fließrichtung, die der Längsrichtung (X) des Profils entspricht, eine Mehrzahl von Elastomermischungen (M1, M2, M3) durch einen Spalt (3), der zum einen durch einen Extrusionskopf (4) und zum anderen durch eine Aufnahmefläche (5) wie eine Walze (6) begrenzt wird, zusammen extrudiert werden, so dass der Querschnitt des Profils (2) geformt werden kann, in der Dicke (H2) entlang einer Richtung, "vertikale Richtung" (Z) genannt, die senkrecht zu der Längsrichtung (X) und zu der Aufnahmefläche (5) verläuft, und in der Breite (W2) entlang einer Richtung, "seitliche Richtung" (Y) genannt, die senkrecht zu der Längsrichtung (X) und zu der vertikalen Richtung (Z) verläuft, wobei das Verfahren einen ersten Schritt (a) umfasst, in dessen Verlauf, in einem ersten Abschnitt (10) des Extrusionskopfes (4), der mit ersten Zuführkanälen (11) versehen ist, in den Spalt (3), durch die ersten Zuführkanäle (11), eine erste Elastomermischung (M1) eingeleitet wird, die in Kontakt mit der Aufnahmefläche (5) gelangt, um eine Unterschicht (12) zu bilden, dann einen zweiten Schritt (b), in dessen Verlauf, in einem zweiten Abschnitt (20) des Extrusionskopfes, der stromab des ersten Abschnitts (10) des Extrusionskopfes entlang der Längsrichtung (X) gelegen ist und mit zweiten Zuführkanälen (21) versehen ist, in den Spalt (3), durch die zweiten Zuführkanäle (21), eine zweite Elastomermischung (M2) eingeleitet wird, die dazu bestimmt ist, einen Profilblock (22) zu bilden, wobei der zweite Abschnitt (20) des Extrusionskopfes mindestens eine Trennwand (23) aufweist, die in der Dicke des Spalts (3) vorspringt und die sich kontinuierlich entlang der Längsrichtung (X) erstreckt, so dass die Trennwand (23) beidseits der Trennwand (23) in der seitlichen Richtung (Y), zum einen eine Formungsrinne (24) begrenzt, die es einem Teil der ersten Elastomermischung (M1) ermöglicht, stoffschlüssig mit der Unterschicht (12) einen Vorsprung, "Keil" (25) genannt, zu bilden, der in der vertikalen Richtung (Z) vorspringt, um eine Stütze für den Profilblock (22) entlang der seitlichen Richtung (Y) bereitzustellen, wobei der Keil (25) zu diesem Zweck eine Seitenwand (26) aufweist, die entlang der Trennwand (23) verläuft und die sich, in einem zu der Längsrichtung (X) senkrechten Querschnitt, entlang einer die Aufnahmefläche (5) schneidenden Richtung erstreckt, und zum anderen eine Zirkulationsrinne (27), die es der zweiten Elastomermischung (M2) ermöglicht, entlang des zweiten Abschnitts (20) des Extrusionskopfes, in Kontakt mit der Trennwand (23), parallel zu der Seitenwand (26) des Keils (25) zu zirkulieren, und ohne mit der Seitenwand (26) des Keils (25) in Verbindung zu kommen, wobei das Verfahren **dadurch gekennzeichnet ist, dass** es einen dritten Schritt (c) umfasst, in dessen Verlauf, in einem dritten Abschnitt (30) des Extrusionskopfes, der stromab des zweiten Abschnitts (20) des Extrusionskopfes liegt, ein Injektor (31) vorgesehen wird, der in der Längsverlängerung der Trennwand (23) entlang der Längsrichtung (X) gelegen ist und der mit einem Injektionsschlitz (32) versehen ist, durch den eine dritte Elastomermischung (M3) eingespritzt wird, die von der ersten Elastomermischung (M1) und von der zweiten Elastomermischung (M2) verschieden ist, so dass die dritte Elastomermischung (M3) zwischen der ersten Elastomermischung (M1), die aus der Formungsrinne (24) hervorgegangen ist, und der zweiten Elastomermischung (M2), die aus der Zirkulationsrinne (27) hervorgegangen ist, Platz nimmt und in Verbindung mit ihnen kommt, indem sie die Seitenwand (26) des Keils (25) bedeckt, so dass eine Schnittstellenschicht, "Entkopplungsschnittstelle" (33) genannt, gebildet wird, die die Seitenwand (26) des Keils (25) von dem Profilblock (22) trennt und es dem Profilblock (22) gleichzeitig ermöglicht, indirekt, über die Entkopplungsschnittstelle (33), in seitliche Abstützung gegen die Seitenwand (26) des Keils zu gelangen.

2. Verfahren nach Anspruch 1, **dadurch gekennzeichnet, dass** die erste Elastomermischung (M1, aus der die Unterschicht (12) und der Keil (25) bestehen, einen komplexen dynamischen Schubmodul (G*_M1) besitzt, der strikt größer als der komplexe dynamische Schubmodul (G*_M2) der zweiten Elastomermischung (M2) ist, aus der der Profilblock (22) besteht, und dass der komplexe dynamische Schubmodul (G*_M3) der dritten Elastomermischung (M3), aus der die Entkopplungsschnittstelle (33) besteht, verschieden von den jeweiligen komplexen dynamischen Schubmodulen (G*_M1, G* _M2) der ersten und der zweiten Elastomermischung (M1, M2) ist.

3. Verfahren nach Anspruch 2, **dadurch gekennzeichnet, dass** der komplexe dynamische Schubmodul (G*_M3) der dritten Elastomermischung (M3), aus der die Entkopplungsschnittstelle (33) besteht, strikt kleiner als die jeweiligen komplexen dynamischen Schubmodule (G*_M1, G* _M2) der ersten und der zweiten Elastomermischung (M1, M2) ist.

4. Verfahren nach einem der vorhergehenden Ansprüche, **dadurch gekennzeichnet, dass** die erste Elastomermischung einen komplexen dynamischen Schubmodul (G*_M1) zwischen 20 MPa und 40 MPa, beispielsweise von 30 MPa, besitzt, dass die zweite Elastomermischung einen komplexen dynamischen Schubmodul (G*_M2) zwischen 1 und 2 MPa, beispielsweise von 1,5 MPa, besitzt und dass die dritte Elastomermischung einen komplexen dynamischen Schubmodul (G*_M3) zwischen 0,25 MPa und 0,55 MPa, beispielsweise von 0,4 MPa, besitzt.

5. Verfahren nach einem der vorhergehenden Ansprüche, **dadurch gekennzeichnet, dass** die Entkopplungsschnittstelle (33) eine Dicke (E33), betrachtet zwischen dem Profilblock (22) und der Seitenwand (26) des Keils (25), aufweist, die zwischen 0,5 mm und 4 mm und zum Beispiel 2 mm beträgt.

6. Verfahren nach einem der vorhergehenden Ansprüche, **dadurch gekennzeichnet, dass** sich die Entkopplungsschnittstelle (33) und somit der Injektionsschlitz (32) in der vertikalen Richtung (Z) über die gesamte Höhe (H33) erstreckt, die der Seitenwand (26) des Keils (25) aus der ersten Elastomermischung (M1) zum einen und dem Profilblock (22) aus der zweiten Elastomermischung (M2) zum anderen, der sich über die Entkopplungsschnittstelle (33) seitlich gegen den Keil (25) abstützt, gemeinsam ist.

7. Verfahren nach einem der vorhergehenden Ansprüche, **dadurch gekennzeichnet, dass** der Keil (25) einen dreieckigen Querschnitt aufweist, dessen Grundseite (25B) auf der Aufnahmefläche (5) ruht und dessen Spitze (25A) zu dem Extrusionskopf (4) hin zeigt.

8. Verfahren nach einem der vorhergehenden Ansprüche, **dadurch gekennzeichnet, dass** der erste und der zweite Abschnitt des Extrusionskopfes (10, 20) so gestaltet sind, dass mit der ersten Elastomermischung (M1) mindestens eine Mulde (45) geschaffen wird, die einstückig einen Unterschichtboden (40) umfasst, der einen ersten Keil (25) und einen zweiten Keil (25') untereinander verbindet, die entlang der seitlichen Richtung (Y) voneinander beabstandet sind und die in der vertikalen Richtung (Z) zu dem Extrusionskopf (4) hin in Bezug auf den Unterschichtboden (40) vorspringen, so dass ein erster seitlicher Rand (46) der Mulde (45) und ein zweiter seitlicher Rand (47) der Mulde (45) gebildet werden, und dadurch, dass die Mulde (45) mit der zweiten Elastomermischung (M2) gefüllt wird, um einen Profilblock (22) zu bilden, indem zum einen zwischen der zweiten Elastomermischung (M2) und dem ersten seitlichen Rand (46) der Mulde eine erste Schicht aus einer dritten Elastomermischung (M3) angeordnet wird, um eine erste Entkopplungsschnittstelle (33) zwischen dem Profilblock (22) und dem ersten Keil (25) zu bilden, und zum anderen zwischen der zweiten Elastomermischung (M2) und dem zweiten seitlichen Rand (47) der Mulde eine zweite Schicht einer dritten Elastomermischung (M3) angeordnet wird, um eine zweite Entkopplungsschnittstelle (33') zwischen dem Profilblock (22) und dem zweiten Keil (25') zu bilden.

9. Verfahren nach Anspruch 8, **dadurch gekennzeichnet, dass** mindestens eine erste Mulde (45) und eine zweite Mulde (45') gebildet werden, die verschieden sind, die im Abstand voneinander entlang der seitlichen Richtung (Y) angeordnet sind und dazu bestimmt sind, jeweils einen ersten Profilblock (22) und einen zweiten Profilblock (22') aufzunehmen, dass die erste und die zweite Mulde (45, 45') entlang der seitlichen Richtung (Y) mittels eines Einschnitts (48) getrennt werden, der eine Umfangsrille des Laufstreifens (1) abbildet und der erhalten wird, indem, bevorzugt in dem ersten Abschnitt (10) des Extrusionskopfes, ein Abstreifer (50) vorgesehen wird, der in Kontakt mit der Aufnahmefläche (5) kommt, um die erste Elastomermischung (M1), aus der die Unterschicht (12) besteht, an der Position des Einschnitts (48) zu entfernen.

10. Verfahren nach einem der vorhergehenden Ansprüche, **dadurch gekennzeichnet, dass** der dritte Abschnitt (30) des Extrusionskopfes (4) eine Mehrzahl von Injektoren (31) beinhaltet, die entlang der seitlichen Richtung (Y) verteilt sind und dazu bestimmt sind, ebenso viele verschiedene Entkopplungsschnittstellen (33) zu bilden, dass die Injektoren (31) von einem gemeinsamen Injektionsverteilerrohr (43) versorgt werden und dass einer oder mehrere der Injektoren (31) mit Durchflusseinstellschrauben (44) ausgestattet sind, die es ermöglichen, die Verteilung der dritten Elastomermischung (M3) zwischen den verschiedenen Injektoren (31) anzupassen.

## Claims

1. Process for manufacturing a tread (1) for a tyre of a vehicle wheel, in the course of which a profiled element (2) is formed by jointly extruding a plurality of elastomer compounds (M1, M2, M3), in a common direction of flow corresponding to the longitudinal direction (X) of said profiled element, through a gap (3) which is delimited on the one hand by an extrusion head (4) and on the other hand by a receiving surface (5) such as a roller (6), such that the cross section of the profiled element (2) can be shaped in thickness (H2) along a direction called the "vertical direction" (Z) which is perpendicular to the longitudinal direction (X) and to the receiving surface (5), and in width (W2) along a direction called the "lateral direction" (Y) which is perpendicular to the longitudinal direction (X) and to the vertical direction (Z), said process comprising a first step (a) in which, in a first portion (10) of the extrusion head (4) provided with first inlet channels (11), a first elastomer compound (M1) is introduced into the gap (3) through said first inlet channels (11) and comes into contact with the receiving surface (5) to form an underlayer (12), and then a second step (b) in which, in a second portion (20) of the extrusion head located downstream of the first portion (10) of the extrusion head in the longitudinal direction (X) and provided with second inlet channels (21), a second elastomer compound (M2) intended to form a tread pattern block (22) is introduced into the gap (3) through said second inlet channels (21), the second portion (20) of the extrusion head having at least one separating partition (23) which projects into the thickness of the gap (3) and which extends continuously in the longitudinal direction (X) so that said separating partition (23) delimits, on either side of said separating partition (23) in the lateral direction (Y), on the one hand a shaping channel (24) enabling part of the first elastomer compound (M1) to form, in one piece with the underlayer (12), a protrusion called a "wedge" (25) which projects in the vertical direction (Z) for the purpose of providing support for the tread pattern block (22) in the lateral direction (Y), said wedge (25) having for this purpose a lateral wall (26) which runs along the separating partition (23) and which, in a cross section normal to the longitudinal direction (X), extends in a direction secant to the receiving surface (5), and, on the other hand, a flow channel (27) which enables the second elastomer compound (M2) to flow along the second portion (20) of the extrusion head, in contact with the separating partition (23), parallel to the lateral wall (26) of the wedge (25) and without forming a joint with said lateral wall (26) of the wedge (25), said process being **characterized in that** it comprises a third step (c) in which, in a third portion (30) of the extrusion head extending downstream of the second portion (20) of the extrusion head, an injector (31) is provided, the injector being located in the longitudinal prolongation of the separating partition (23) in the longitudinal direction (X) and being provided with an injection slot (32) through which a third elastomer compound (M3), different from the first elastomer compound (M1) and the second elastomer compound (M2), is injected, in such a way that said third elastomer compound (M3) is placed between, and forms a joint with, the first elastomer compound (M1) emerging from the shaping channel (24) and the second elastomer compound (M2) emerging from the flow channel (27), by covering the lateral wall (26) of the wedge (25) so as to form an interface layer called the "decoupling interface" (33) which isolates said lateral wall (26) of the wedge (25) from the tread pattern block (22) while enabling said tread pattern block (22) to come to bear thus laterally against said lateral wall (26) of the wedge indirectly, via said decoupling interface (33).

2. Process according to Claim 1, **characterized in that** the first elastomer compound (M1), forming the underlayer (12) and the wedge (25), has a complex dynamic shear modulus (G*_M1) that is strictly greater than the complex dynamic shear modulus (G*_M2) of the second elastomer compound (M2) forming the tread pattern block (22), and **in that** the complex dynamic shear modulus (G*_M3) of the third elastomer compound (M3) forming the decoupling interface (33) is different from the respective complex dynamic shear moduli (G*_M1, G*_M2) of the first and second elastomer compounds (M1, M2).

3. Process according to Claim 2, **characterized in that** the complex dynamic shear modulus (G*_M3) of the third elastomer compound (M3) forming the decoupling interface (33) is strictly smaller than the respective complex dynamic shear moduli (G*_M1, G*_M2) of the first and second elastomer compounds (M1, M2).

4. Process according to any of the preceding claims, **characterized in that** the first elastomer compound has a complex dynamic shear modulus (G*_M1) of between 20 MPa and 40 MPa, equal to 30 MPa for example, **in that** the second elastomer compound has a complex dynamic shear modulus (G*_M2) of between 1 MPa and 2 MPa, equal to 1.5 MPa for example, and the third elastomer compound has a complex dynamic shear modulus (G*_M3) of between 0.25 MPa and 0.55 MPa, equal to 0.4 MPa for example.

5. Process according to any of the preceding claims, **characterized in that** the decoupling interface (33) has a thickness (E33), considered between the tread pattern block (22) and the lateral wall (26) of the wedge (25), that is preferably between 0.5 mm and 4 mm, being equal to 2 mm for example.

6. Process according to any of the preceding claims, **characterized in that** the decoupling interface (33), and therefore the injection slot (32), extend, in the vertical direction (Z), over the whole of the height (H33) which is common to the lateral wall (26) of the wedge (25) made of first elastomer compound (M1) on the one hand, and to the tread pattern block (22) made of second elastomer compound (M2), which bears laterally on said wedge (25) via said decoupling interface (33), on the other hand.

7. Process according to any of the preceding claims, **characterized in that** the wedge (25) has a cross section of triangular shape, whose base (25B) rests on the receiving surface (5) and whose peak (25A) points towards the extrusion head (4).

8. Process according to any of the preceding claims, **characterized in that** the first and second portions of the extrusion head (10, 20) are arranged so as to create with the first elastomer compound (M1) at least one cradle (45) comprising, in one piece, an underlayer base (40) which interconnects a first wedge (25) and a second wedge (25') which are separate from each other in the lateral direction (Y) and which project in the vertical direction (Z), towards the extrusion head (4), from the underlayer base (40), so as to form a first lateral edge (46) of said cradle (45) and a second lateral edge (47) of said cradle (45), and **in that** said cradle (45) is filled with the second elastomer compound (M2) in order to form a tread pattern block (22), there being interposed, on the one hand, between said second elastomer compound (M2) and the first lateral edge (46) of the cradle, a first layer of third elastomer compound (M3) to form a first decoupling interface (33) between the tread pattern block (22) and the first wedge (25), and, on the other hand, between said second elastomer compound (M2) and the second lateral edge (47) of said cradle, a second layer of third elastomer compound (M3) to form a second decoupling interface (33') between said tread pattern block (22) and the second wedge (25').

9. Process according to Claim 8, **characterized in that** there are formed at least a first cradle (45) and a second cradle (45'), separate from each other and spaced apart in the lateral direction (Y), and intended to receive, respectively, a first tread pattern block (22) and a second tread pattern block (22'), and **in that** said first and second cradles (45, 45') are separated in the lateral direction (Y) by means of a trench (48) which is the precursor of a circumferential groove of the tread (1), and which is formed by providing, preferably in the first portion (10) of the extrusion head, a scraper (50) which comes into contact with the receiving surface (5) to eliminate the first elastomer compound (M1) forming the underlayer (12) at the position of said trench (48).

10. Process according to any of the preceding claims, **characterized in that** the third portion (30) of the extrusion head (4) comprises a plurality of injectors (31) which are distributed along the lateral direction (Y) and are intended to form the same number of separate decoupling interfaces (33), **in that** said injectors (31) are supplied by a common injection line (43), and **in that** one or more of said injectors (31) is fitted with flow rate control screws (44) for adjusting the distribution of the third elastomer compound (M3) between the different injectors (31).
